# EUROPEAN PATENT APPLICATION

(11) **EP 2 026 569 A1**
(43) Date of publication of application: **18.02.2009**
(21) Application number: 07290987.2
(22) Date of filing: 06.08.2007
(51) Int. Cl.: H04N 5/445

(54) **TV portal system for selecting and visualizing multimedia services**

(71) Applicant: Alcatel Lucent, 75008 Paris (FR)
(72) Inventor: Moons, Jan Lode Mia, 2220 Heist-op-den-Berg (BE); De Mondt, Hans, 2960 Brecht (BE); Vanparijs, Frieda, 1880 Kapelle-op-den-Bos (BE)
(74) Representative: D'Halleweyn, Nele Veerle Trees Gertrudis

(57) **Abstract**

The invention relates to a TV portal system and method for selecting and visualizing a plurality of multimedia services on a TV screen, the system comprising a plurality of user interface components, each component being connectable to one of said multimedia services; a runtime environment for handling said components; a processing application for retrieving the components in function of a request received from a user; a graphical application in communication with the processing application for visualizing the retrieved components on the TV.

## Description

The invention relates to a TV portal system for selecting and visualizing a plurality of multimedia services, such as broadcast TV, webcam streams, Teletext, etc., on a TV screen.

At present a number of solutions for selecting and visualizing multimedia sources can be distinguished.

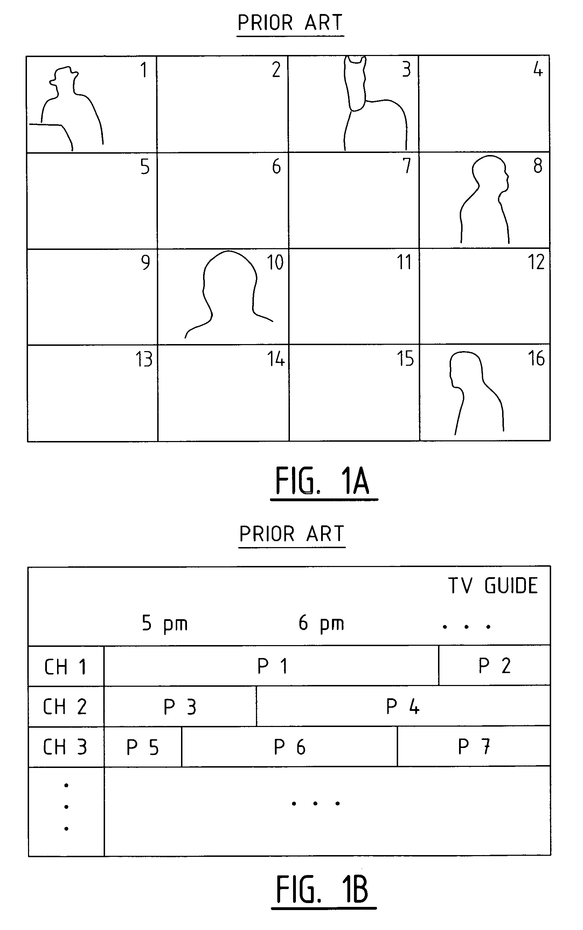

A first example of a TV portal system of the state of the art is the well known TV mosaic, i.e. a presentation of a raster of all currently ongoing TV programs at each of the TV channels. Such a presentation is shown in figure 1A and takes the form of a screen on which a raster for sixteen channels is shown. Because of the huge number of TV channels and the limited size of the screen, not every TV program can be shown in the raster. Usually certain TV programs are shown only for a limited time in a cell of the raster, one cell being used for a number of different TV channels.

A second solution consists in showing an electronic programming guide (EPG) or an interactive program guide (IPG) on a TV screen, which guide allows a viewer to navigate, select and discover content by time, title, channel, etc. using a remote control. The technology is based upon broadcasting data to an application usually residing in middleware in a set-top box that connects to a TV and enables the application to be displayed. Certain providers may also have the same EPG content available for use within an Internet Browser. Typical elements of an EPG comprise a graphical user interface which enables the display of program titles, descriptive information, the channel name, etc. as shown in figure 1B. The information is typically displayed on a grid with the option to select more information on each program. While an EPG could be used as the starting point for watching TV, it is not giving the user a TV experience since it is not showing the viewer the actual TV shows. Further, TV users are not always used to work with a computer-like program and the EPG is hard to navigate through with a simple TV set remote control. Finally, often too much information is given at a time, which makes the information hard to read.

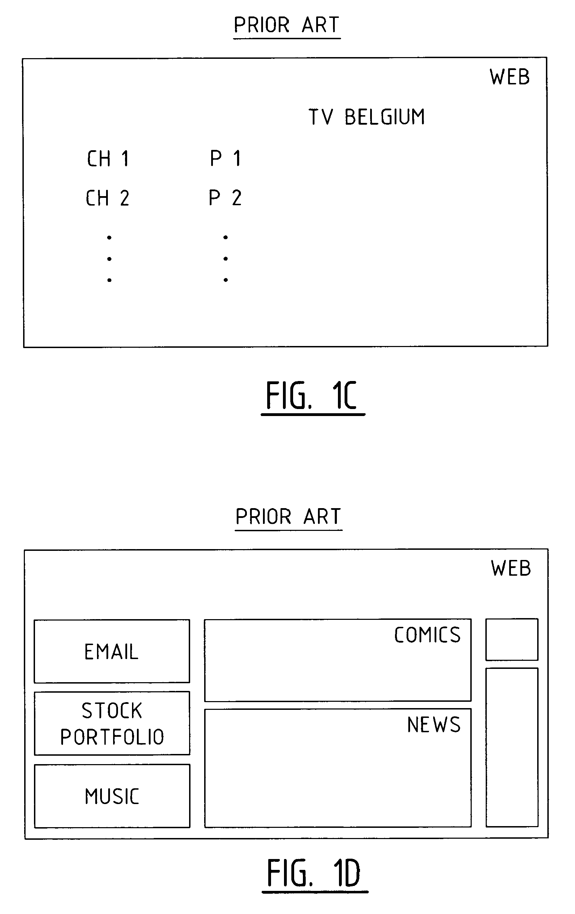

Further, web portals such as Mediahopper and My Yahoo! exist. The principle of the Mediahopper web portal is shown in figure 1C. The web portal provides information about several TV channels in several countries. Most of the content is not streamed live but is content that has been made available to download through the internet. Further the user cannot personalize this web portal.

A view of a personalized web portal of My Yahoo! is shown in figure 1D. This web portal is an entry point or gateway to the World Wide Web and can be personalized by adding favorite blogs, stock portfolios, comics, etc. In this portal it is only possible to display internet related content.

In conclusion, at present a user has to pick up a TV guide or consult an EPG to find something interesting to watch, taking the user away from the real TV experience. Also, when the user wants to watch his preferred teletext pages, he has to start these up and search for the page he is interested in. This process has to be repeated every time because favorite teletext pages cannot be bookmarked. A further shortcoming of the prior art is that recorded TV content cannot be shown together with the broadcasted TV content in a TV mosaic. The user has to go into the PVR's application to see which content is recorded.

The object of the present invention is to provide a TV portal system which can be personalized in function of the user's needs and which can display both TV content and other multimedia content.

To reach this object, the TV portal system for selecting and visualizing a plurality of multimedia services on a TV according to the invention is distinguished in that it comprises: a plurality of user interface components, typically portlets, each component being connectable to one of said multimedia services; a runtime environment for handling said components, typically a portlet container; a processing application for retrieving the components in function of a request received from a user; and a graphical application in communication with the processing application for visualizing the retrieved components on the TV.

Such a TV portal system allows the viewer to watch different multimedia services in a TV portal and to personalize this view by sending requests to retrieve certain components of his choice. In other words the system allows the user to have a personalized entry point for watching TV, wherein both TV content and other multimedia content can be selected and visualized.

According to a preferred embodiment at least the graphical application is running on a set-top box connected to the TV.
According to a possible embodiment the TV portal system is realized as a monolithic program, wherein the runtime environment, the processing application and the plurality of interface components are also integrated in the set-top box. This embodiment has the advantage that the communication between the graphical application and the actual application, i.e. the processing application can be done using an application program interface (API), resulting in a relatively fast communication.

According to another possible embodiment the TV portal system is realized as a client-server program, wherein only the graphical application is integrated in the set-top box, and the runtime environment, the processing application and the plurality of interface components are realized in the network, typically on a server of a service provider. This embodiment has the advantage that the application can be easily updated when new features have to be added.

According to a preferred embodiment the plurality of multimedia services include at least one of the following services: services of a service provider, such as Broadcast TV, internet, TV recording on a network PVR; services provided by a set-top box manufacturer; services provided by a PVR manufacturer; services defined by a user, such as webcam streams.

The invention also relates to a set-top box for use in an embodiment of the TV portal system according to the invention, wherein the set-top box at least comprises the graphical application arranged to communicate with the processing application for visualizing the retrieved components on the TV.

The invention further relates to a method for providing a TV entry point for watching TV, wherein a plurality of multimedia services are selected and visualized in a TV portal. The method is distinguished in that
- requests relating to the plurality of multimedia services to be shown in the TV portal, are sent by a user via a graphical user interface;
- the requests are processed and interface components corresponding with said requested multimedia services are retrieved,
- the content of each interface component is run;
- a graphical user interface is built using the content of the retrieved interface components in order to display a number of windows on the TV, each window showing one of the requested multimedia services.

Such a method allows the user to view only small screens (windows) of his favorite TV channels or other multimedia services in his TV portal, in contrast with the TV mosaic of the prior art that shows the broadcasts of all the TV channels.

According to a preferred embodiment the requests are generated in reply to the manipulation of a pointing device, such as a remote control, by a user, wherein the manipulation allows the user to select a window in the TV screen. In that way the user only has to know how to use the remote control in order to be able to use the method of the invention. Upon selection of a window, preferably the user is given at least two of the following options:
- to watch the window in full screen;
- to replace the multimedia service shown in the selected window with a different multimedia service;
- to change viewing preferences of the multimedia service shown in the selected window.

The accompanying drawings are used to illustrate presently preferred, non-limiting, exemplary embodiments of the present invention. The above and other advantages, features, and objects of the invention will become more apparent and the invention will be better understood from the following detailed description when read in conjunction with the accompanying drawings in which:
Figures 1A-D are simplified views of TV portals (figures A and B) and web portals (figures C and D) according to the state of the art;
Figure 2 is a simplified schematic diagram of the basic architecture of an embodiment of the invention;
Figures 3A-C are simplified schematic diagrams of three possible implementations of the architecture shown in figure 2;
Figure 4 shows a possible layout of a TV screen of a TV portal system according to the invention;
Figure 5 illustrates the step of selecting a portlet of the TV portal of figure 4;
Figure 6 illustrates the step of editing a portlet of the TV portal of figure 4;
Figure 7 illustrates an embodiment of the method for adding a portlet to a TV portal according to the invention.

Figures 1A-D illustrate portals of the prior art and have been discussed above.

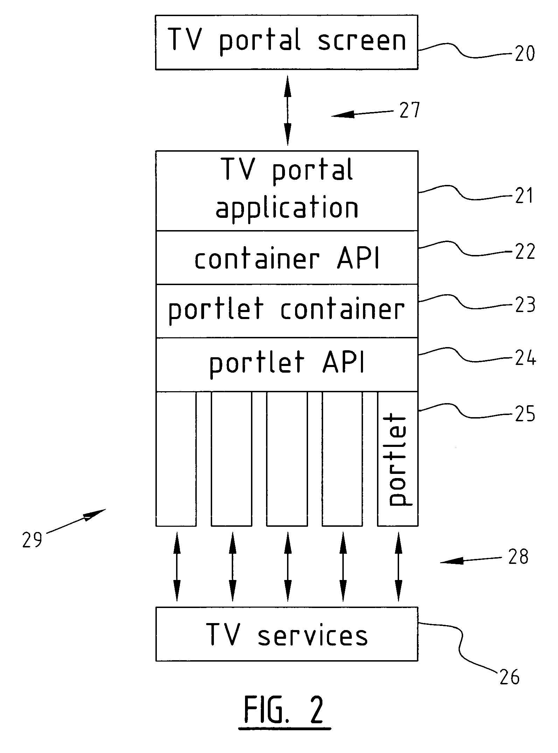

Now the basic architecture of an embodiment of the portal system of the invention will be set out with reference to figure 2. The architecture comprises at the TV end a "TV portal screen application" 20, i.e. a visualization means or small graphical application for data coming from the different TV services/portlets in order to obtain a view of the TV portal on a TV screen. In other words the TV portal screen application 20 is a graphical user interface (GUI) that makes the TV portal visible to the user.

The TV portal screen application 20 communicates with a TV portal application 21, wherein requests and responses 27 are exchanged between the TV portal screen 20 and the TV portal application 21. The TV portal application 21 is a processing application, processing the requests communicated by the viewer via the TV portal screen, and retrieving portlets 25 according to the user requests. A portlet is an interface component generating content of a multimedia service. By aggregating the content generated by a plurality of portlets 25, a single user interface is generated which integrates a plurality of different multimedia services 26.

In order to obtain the content of each portlet 25 which the user wishes to have in his TV portal, the TV portal application 21 calls the TV portlet container 23. The TV portlet container 23 is a runtime environment managing each portlet, and in particular handling tasks such as the life-cycle, i.e. the initialization and destruction, security etc. of each portlet. Further the container 23 provides a portlet application programming interface 24 (portlet API) that has to be implemented by the portlets 25 in order to run in the portlet container 23. This programming interface allows the portlets 25 to communicate back and forth with the container 23.

In other words, the TV portlet container 23 manages a number of TV portlets 25, which are pluggable interface components that provide a presentation layer to TV services 26. Portlets 25 connect to TV services 26 to retrieve the TV content to be shown on the TV screen.

TV services 26 may include any multimedia service, such as:
- services provided by a provider (TV broadcast provider, internet service provider), e.g. access to teletext, access to the TV recording on the network PVR, community services like Amigo TV, etc.
- services provided by the manufacturer of the set-top box or PRV
- user defined services, such as webcam streams, surveillance cam streams, digital photo collection, etc.

The portal applications may be developed using e.g. JavaServer pages (JSP) or Microsoft Active Server Pages (ASP) technologies. The Java Portlet Specification provides a standard for developing portal components with the Java Programming Language, for example, but the skilled person will understand that other specifications exist and may be used.

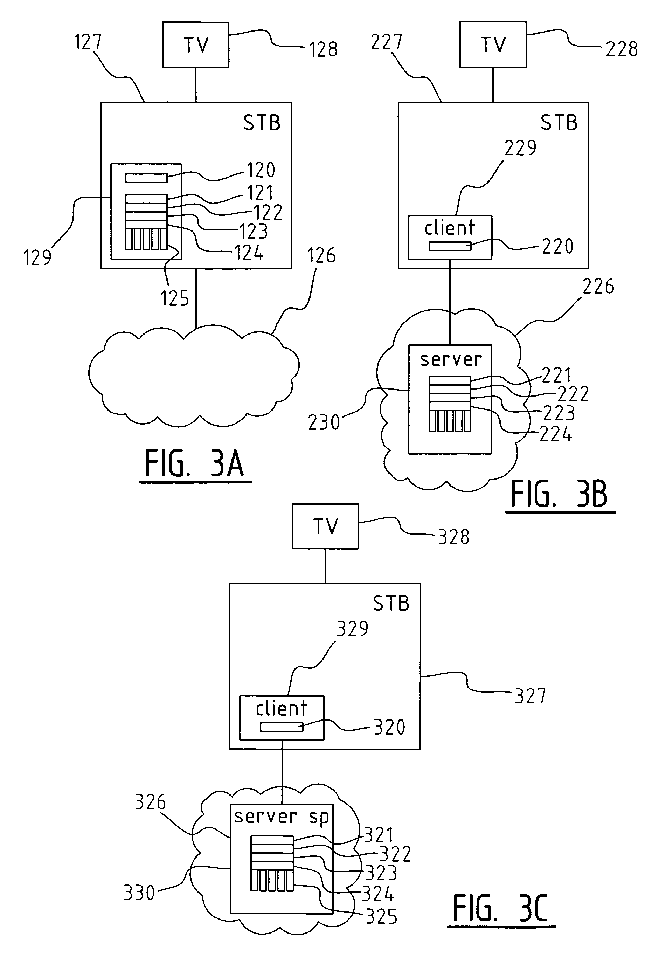

Figures 3A-C illustrate three possible implementation embodiments of the TV portal architecture. In figure 3A the TV portal is implemented as a monolithic program 129 where all the different blocks described above (TV portal screen 120, TV portal application 121, container API 122, container 123, portlet API 124, portlets 125) run on a set-top box 127 connected to a network 126. The advantage of this approach is that the communication between the TV portal screen application 120 and the actual TV portal application 121 can be done using an API defined in the source code, without the need for a protocol to be developed. Hence, the monolithic program approach is relatively fast because the communication is only a matter of calling each other's functions, methods, etc. The drawback of this embodiment is that the program is not easy to update with a newer version - when new features have to be added, the complete program has to be copied to the set-top box.

According to another possible embodiment, shown in figure 3B, the TV portal is a client-server application 229, 230 where only the TV portal screen application 220 runs on the set-top box (STB) 227, and the other blocks 221-225, i.e. the core application runs somewhere in the network 226. Such an embodiment has the advantage that new features can be added in a convenient way by simply updating the version on the server with the new updates. On the other hand, communication now takes place over the network, delaying the responsiveness of the TV portal screen due to network latencies.

Figure 3C illustrates an example of a client-server embodiment 329-330, where the TV portal screen application 320 runs on the STB 327 and the other components 321-325 are run on a server of the service provider SP.

The skilled person will realize that still other embodiments are possible, and that e.g. a number of portlets could be provided on a server in the network, while other portlets for user defined services or TV recording services are provided on the STB.

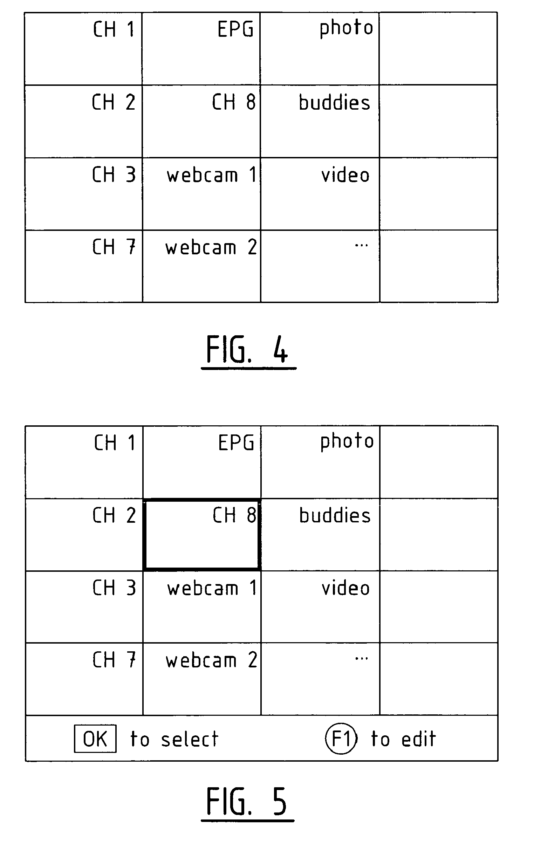

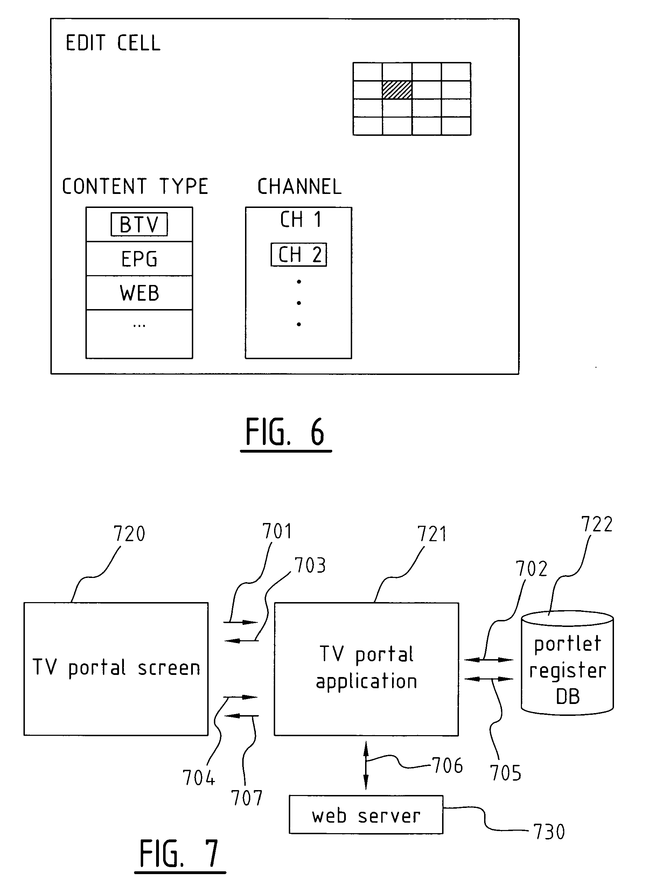

Figure 4 shows an example of the user's view on a screen of the TV portal. In the shown example, sixteen portlets are shown, but the skilled person will understand that this number may be variable. A number of the portlets may contain broadcast TV content (e.g. CH1-CH3, CH7, CH8), while other portlets may contain other TV services, such as recorded TV content, personalized EPG, etc. From the user's point of view each portlet is a small TV application that the user is able to display and configure, as set out below with reference to figures 5 and 6.

Figure 5 illustrates how a user can select a portlet using e.g. the up and down keys of a remote control which will move a square over the screen. After the user has selected a portlet, he has two options in the present example:
- watch the portlet in full screen by pressing the OK button on a remote control;
- configure the portlet, i.e. change the preferences of the portlet or replace the portlet for another portlet.

The skilled person will understand that other options could be provided, such as selecting a number of portlets to be displayed in full screen. In that regard the size of the portlets could be adapted in function of the number of portlets to be displayed on the screen. Also the TV portal could be divided in thematic areas like TV channels, Teletext pages, recorded programs, etc.

If the user chooses to configure the portlet, a screen as shown in figure 6 will appear in the exemplary embodiment. In this screen the user can select first the content of the portlet. In the present example broadcast TV is selected. Next a list with the different channels is displayed in a second window on the screen. The user now has the possibility to select the channel of his choice.

Depending on the content type chosen, a plurality of additional windows may appear in function of the number of preferences available. The skilled person will understand that many variations are possible, and that the invention is in no way limited by the layout used on the screen, the available preferences, etc.

Now there will be given some examples of the messages that are exchanged between a TV portal screen application and the TV portal application when a portlet has to be added or deleted from a TV portal. From the TV portal screen the user has the possibility to add or remove portlets using for example a remote control.

When a user decides to add a portlet the following exemplary method steps are performed - see figure 7:
- an "add portlet" request 701 is sent from the TV Portal screen application 720 to the TV Portal application 721 asking it to show the GUI for adding portlets. In the monolithic program embodiment this request will typically be an API call for a monolithic application. In the client-server embodiment this could be a message sent over TCP/IP, such as a HTTP or Web service call.
- Upon receipt of the request, the TV portal application looks up (by exchanging messages 702 over TCP/IP, via a HTTP or Web service call, for example) the available portlets in a Portlet Registrar database (DB) 722. Such a database typically contains the descriptions and URL's to all available portlets. Producers of portlets will have to register their portlets in this database in order for the portlets to be traceable.
- With this information the TV portal application builds the screen for adding portlets, and sends this screen back to the TV portal screen application in step 703. The TV portal screen application 720 will then ensure the display on the TV screen. This display can for example have a layout as illustrated in figure 6.
- The user can now go through the displayed list of portlets and select the portlet of his choice, as explained above. Upon selection of a portlet X, an "add portlet X" request 704 is sent to the TV portal application asking it to retrieve the selected portlet X. The TV portal application will then look up (step 705) the address of portlet X (a URL, for example) in the Portlet Registrar DB.
- After having obtained the address, the content of portlet X is retrieved at this address. In case of a URL, the specific portlet content will be downloaded from the corresponding web server (step 706).
- The TV portal application 721 will now install portlet X, typically registering portlet X for the user's set-top box. Note that this registration is not a registration in the Portlet Registrar DB, but a registration used directly by the TV portal application for keeping track of all the portlets it is running, i.e. all the portlets it has to load every time the TV portal is used by the viewer. Portlet X is added to the screen (step 707), and the TV portal screen application will ensure display to the user. This can be a display of the portlet ready to be used, or a display of further preferences to be selected by the user, such as setting the Teletext page or the TV channel the user likes, as illustrated in figure 6.

When a user indicates to the system that he wants to remove a portlet from the TV portal, e.g. by selecting a portlet using his remote control and selecting a remove button on the screen, the following exemplary steps take place:
- A "remove portlet X" request is send from the TV portal screen application to the TV portal application. This could be an API call (monolithic approach) or a message sent over TCP/IP (client-server approach) as set out above for the "add portlet" request, for example.
- Upon receipt of the "remove portlet X" request, the TV portal application deletes portlet X with all its settings, unregisters it from the set-top box, and sends a message to the TV portal screen application to remove said portlet X from the TV display.

Changing a portlet X in the TV screen for a portlet Y, is a combination of the methods described above for removing and adding a portlet, and therefore will not be further elucidated.

From the description above the skilled person will understand that the invention provides numerous advantages. The TV user has a personalized entry point or gateway for watching television and he only has to know how to use the TV's remote control to be able to use the TV portal. Further service providers can add additional TV services in a very convenient manner. Set-top box and PVR manufacturers can differentiate from each other by providing specific TV services, such as portlets that are able to create and show photo albums, portlets that are able to add personalized music, etc.
While the principles of the invention have been set out above in connection with specific embodiments, it is to be clearly understood that this description is merely made by way of example and not as a limitation of the scope of protection which is determined by the appended claims.

## Claims

1. TV portal system for selecting and visualizing a plurality of multimedia services on a TV screen, **characterized by:**
- a plurality of user interface components, each component being connectable to one of said multimedia services;
- a runtime environment for handling said components;
- a processing application for retrieving the components in function of a request received from a user;
- a graphical application in communication with the processing application for visualizing the retrieved components on the TV.

2. TV portal system according to claim 1, **characterized in that** each user interface component is a portlet, and that the runtime environment is a portlet container.

3. TV portal system according to claim 1, comprising a set-top box, **characterized in that** at least the graphical application is realized in the set-top box.

4. TV portal system according to claim 1, comprising a set-top box, **characterized in that** the graphical application, the runtime environment, the processing application and the plurality of interface components are integrated in the set-top box.

5. TV portal system according to claim 1, comprising a set-top box connected to a network, **characterized in that** the runtime environment, the processing application and the plurality of interface components are realized in the network, typically on a server of a service provider.

6. TV portal system according to claim 1, **characterized in that** the plurality of multimedia services include at least one of the following services:
- services of a service provider;
- services provided by a set-top box manufacturer;
- services provided by a PVR manufacturer;
- services defined by a user.

7. Method for providing a TV entry point for watching TV, wherein a plurality of multimedia services are selected and visualized in a TV portal, **characterized in that**
- requests relating to the plurality of multimedia services to be shown in the TV portal, are sent by a user via a graphical user interface;
- the requests are processed and interface components corresponding with said requested multimedia services are retrieved,
- the content of each interface component is run;
- a graphical user interface is built using the content of the retrieved interface components in order to display a number of windows on the TV, each window showing one of the requested multimedia services.

8. Method according to claim 7, **characterized in that** the requests are generated in reply to the manipulation of a pointing device, such as a remote control, by a user.

9. Method according to claim 8, **characterized in that** the manipulation allows the user to select a window in the TV screen, wherein the user is given at least two of the following options:
- to watch the window in full screen;
- to replace the multimedia service shown in the selected window with a different multimedia service;
- to change viewing preferences of the multimedia service shown in the selected window.

10. Set-top box for use in a TV portal system according to claim 1, said set-top box at least comprising the graphical application arranged to communicate with the processing application for visualizing the retrieved components on the TV.
